# EUROPEAN PATENT APPLICATION

(11) **EP 2 088 698 A1**
(43) Date of publication of application: **12.08.2009**
(21) Application number: 09152327.4
(22) Date of filing: 06.02.2009
(51) Int. Cl.: H04B 10/18, G02B 6/02

(54) **Optical transmission apparatus and system**

(30) Priority: 07.02.2008 JP 2008028018
(71) Applicant: NEC Corporation, Minato-ku Tokyo 108 (JP)
(72) Inventor: Inada, Yoshihisa, Minato-ku Tokyo 108 (JP)
(74) Representative: MacDougall, Alan John Shaw

(57) **Abstract**

Disclosed is an optical fiber transmission system for transmitting an optical signal by DPSK modulation includes a plurality of NZ-DSF (Non-Zero Dispersion Shifted single-mode optical Fiber) transmission line blocks (5), each of which has N spans of a span comprising a serially connected NZ-DSF (1) and optical repeater (2), and one span that includes a dispersion compensating fiber (3) and an optical repeater (4). The average wavelength dispersion value of each NZ-DSF transmission line block (5) is made non-zero.

## Description

### REFERENCE TO RELATED APPLICATION

This application is based upon and claims the benefit of the priority of Japanese patent application No. 2008-028018, filed on February 7, 2008, the disclosure of which is incorporated herein in its entirety by reference thereto.

### FIELD OF THE INVENTION

This invention relates to an optical transmission line and optical transmission system. More particularly, the invention relates to a wavelength division multiplexing (WDM) optical fiber transmission line and wavelength division multiplexing optical fiber transmission system that compensates for wavelength dispersion.

### BACKGROUND ART

DPSK (Differential Phase Shift Keying) modulation/demodulation is one effective method used in a WDM optical fiber transmission system owing to its high receiver sensitivity characteristic and low non-linearity characteristic. With DPSK, data "1" is assigned to a phase difference of π between adjacent bits and data "0" is assigned to a phase difference of zero between adjacent bits, by way of example.

In DPSK modulation/demodulation, use is made of the phase of light (and inversion of phase) as means for transmitting bits "0", "1". As a consequence, the system is readily susceptible to the effects of phase noise and it is difficult to exploit full performance under conditions where phase noise tends to increase.

In an underwater optical fiber cable transmission system that applies ON-OFF keying referred to as NRZ (Non-Return to Zero) or RZ (Return to Zero), NZ-DSF (Non-Zero Dispersion Shifted single-mode optical Fiber) generally is employed.

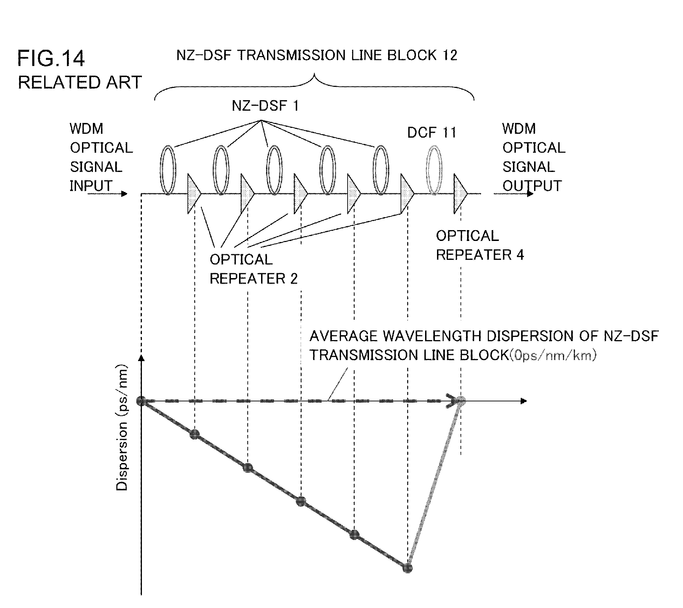

Fig. 14 illustrates a typical configuration of an optical fiber transmission line using an NZ-DSF. This is an arrangement in which a DCF (Dispersion Compensating Fiber) 11 is deployed every N spans (where N=5 in Fig. 14) of an NZ-DSF 1. Wavelength dispersion that accompanies the NZ-DSF is compensated for dispersion by the DCF 11 and the setup is such that dispersion will be zero in the vicinity of the center wavelength of the band of signal wavelengths used.

Patent Document 1 discloses dispersion management in which spans of sections LA1 to LA9 are equipped with respective NZ-DSFs (which have a zero dispersion wavelength at 1585 nm and the wavelength dispersion of which is about -0.2 ps/nm/km) and optical repeaters (EDF amplifiers) (one span = 50 km), a span of a section LA10 is equipped with an SMF (Single Mode Fiber) (which has a zero dispersion wavelength at 1310 nm and the wavelength dispersion of which is about +18 ps/nm/km), one dispersion compensating interval LA is formed by nine spans and the SMF span, and two dispersion compensating intervals LA are connected between a transmit station and a receive station over a distance of 1000 km.

Patent Document 2 discloses an optical communication transmission system in which a repeater section has multiple stages of optical transmission fibers and optical amplifying repeaters. The dispersion value of the optical transmission fibers is different from zero in the signal optical wavelength, or regions in which dispersion value becomes zero are few. This patent document describes use of optical fiber having negative dispersion of -0.4 ps/nm/km, or values higher and lower than this value, or use of optical fiber having positive dispersion.

Patent Document 3 discloses an arrangement having a dispersion compensating fiber DCF every other several DSF sections. In blocks where the dispersion compensating fiber has been inserted, dispersion is not made zero with respect to the center wavelength of distribution in the signal optical wavelength. The final residual dispersion is made zero at the position where a receiver is installed.

[Patent Document 1] Japanese Patent Kokai Publication No. JP-P2004-228715A
[Patent Document 2] Japanese Patent Kokai Publication No. JP-A-6-85758
[Patent Document 3] Japanese Patent Kokai Publication No. JP-A-11-331074

The disclosures of Patent Documents 1 to 3 are incorporated by reference in this specification. An analysis of the related art in the present invention is given below.

With ON-OFF keying, as the amount of accumulation of wavelength dispersion in a transmission line increases, waveform distortion increases. The smaller the cumulative dispersion in a region, the better the transmission characteristic. In the vicinity of the center of signal wavelength band, average wavelength dispersion in NZ-DSF transmission line block 12 (see Fig. 14) is made zero and the amount of deviation in wavelength dispersion is suppressed in the signal wavelength used.

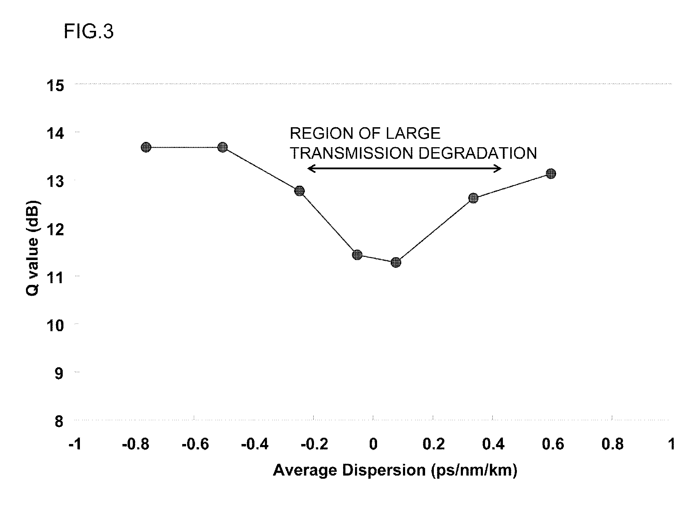

In a DPSK modulated/demodulated signal, however, when the average wavelength dispersion of the NZ-DSF transmission line block is in the vicinity of zero, phase noise tends to increase and degradation of the transmission characteristic, such as in increase in signal waveform distortion after transmission, occurs, as illustrated in Fig. 3 (used in describing an embodiment of the present invention), by way of example.

### SUMMARY OF THE DISCLOSURE

Accordingly, an object of one embodiment is to provide an optical transmission line and optical transmission system in which degradation of the transmission characteristic is avoided in DPSK modulation/demodulation.

The embodiments disclosed in this specification has the structure set forth below in order to solve one or more of the above mentioned problems.

According to an aspect of the present invention, there is provided an optical transmission line for transmitting an optical signal by DPSK modulation, comprising an NZ-DSF transmission line block that includes N stages (where N is a prescribed positive integer) of NZ-DSFs serially connected, and at least one DCF placed at least as one stage among a preceding stage, succeeding stage and intermediate stage of the total N stages of NZ-DSFs; wherein an average wavelength dispersion value of the NZ-DSF transmission line block is made non-zero.

In an exemplary embodiment of the present invention, the NZ-DSF transmission line block has an optical repeater, which compensates for loss of the NZ-DSF, as a preceding stage or succeeding stage of one stage of the NZ-DSFs.

In an exemplary embodiment of the present invention, the NZ-DSF transmission line block has an optical repeater, which compensates for loss of the DCF, as a preceding stage or succeeding stage of the DCF.

In an exemplary embodiment of the present invention, the DCF makes the average wavelength dispersion value of the NZ-DSF transmission line block non-zero by allowing some dispersion, which is accumulated by the N stages of NZ-DSFs, to remain instead of applying 100% compensation, or by over-compensating for the accumulated dispersion.

In an exemplary embodiment of the present invention, the optical transmission line has a plurality of stages of the NZ-DSF transmission line blocks serially connected.

In an exemplary embodiment of the present invention, the optical transmission line has at least one block DCF that includes one or a plurality of DSFs, wherein a residual dispersion value at a receiving end at the terminus of the optical transmission line is made zero.

In an exemplary embodiment of the present invention, the block DCF is provided at least as any one stage among a preceding stage, intermediate stage and succeeding stage of the plurality of stages of the NZ-DSF transmission line blocks serially connected, wherein a residual dispersion value at the receiving end is made non-zero.

In an exemplary embodiment of the present invention, polarities of the average wavelength dispersion values of the plurality of stages of the NZ-DSF transmission line blocks are the same as one another.

In an exemplary embodiment of the present invention, the plurality of stages of the NZ-DSF transmission line blocks in which the average wavelength dispersion values are of positive polarity are serially connected, the plurality of stages of the NZ-DSF transmission line blocks in which the average wavelength dispersion values are of negative polarity are serially connected, and the residual dispersion value at the receiving end is made zero.

In an exemplary embodiment of the present invention, the plurality of stages of the NZ-DSF transmission line blocks include a first group of serially connected NZ-DSF transmission line blocks in which the average wavelength dispersion values are of positive polarity; and a second group of serially connected NZ-DSF blocks, as a preceding stage or succeeding stage of the first group of NZ-DSF transmission line blocks, in which the average wavelength dispersion values are of negative polarity; wherein the residual dispersion value at the receiving end of the optical transmission line is made zero.

In an exemplary embodiment of the present invention, the average wavelength dispersion value of the NZ-DSF transmission line block is equal to or less than -0.4 ps/nm/km. Alternatively, the average wavelength dispersion value of the NZ-DSF transmission line block is equal to or greater than +0.4 ps/nm/km.

In an exemplary embodiment of the present invention, the optical transmission line has a plurality of NZ-DSF transmission line blocks in which the average wavelength dispersion value is equal to or less than -0.4 ps/nm/km, and a plurality of NZ-DSF transmission line blocks in which the average wavelength dispersion value is equal to or greater than +0.4 ps/nm/km.

In an exemplary embodiment of the present invention, the optical signal is transmitted by WDM.

In another aspect of the present invention, there is provided an optical transmission system comprising the above-described optical transmission line; a transmitting unit for outputting signal light to the optical transmission line; and a receiving unit for inputting signal light from the optical transmission line.

In accordance with embodiments of the present invention, it is possible to reduce signal waveform distortion after transmission and realize excellent transmission quality in a DPSK modulation system.

### BRIEF DESCRIPTION OF THE DRAWINGS

Fig. 1 is a diagram illustrating the configuration of an exemplary embodiment of the present invention;
Figs. 2A and 2B are diagrams illustrating dispersion maps of NZ-DSF transmission line blocks in an exemplary embodiment of the present invention, in which Fig. 2A is a diagram illustrating a dispersion map in which average wavelength dispersion of an NZ-DSF transmission line block is equal to or less than -0.4 ps/nm/km and Fig. 2B is a diagram illustrating a dispersion map in which average wavelength dispersion of an NZ-DSF transmission line block is equal to or greater than +0.4 ps/nm/km;
Fig. 3 is a diagram illustrating average wavelength dispersion of an NZ-DSF transmission line block and Q value (10Gbps-RZ-DPSK) after transmission over a distance of 9000 km;
Figs. 4A and 4B are diagrams illustrating an example of the configuration of a transmission line fiber using NZ-DSF transmission line blocks in an exemplary embodiment of the present invention;
Fig. 5 is a diagram illustrating an example of the configuration of a transmission line fiber using NZ-DSF transmission line blocks in an exemplary embodiment of the present invention;
Fig. 6 is a diagram illustrating an example of the configuration of a transmission line fiber using NZ-DSF transmission line blocks in an exemplary embodiment of the present invention;
Figs. 7A and 7B are diagrams illustrating an example of the configuration of a transmission line fiber using NZ-DSF transmission line blocks in an exemplary embodiment of the present invention;
Figs. 8A and 8B are diagrams illustrating an example of the configuration of a transmission line fiber using NZ-DSF transmission line blocks in an exemplary embodiment of the present invention;
Fig. 9 is a diagram illustrating an example of the configuration of a transmission line fiber using NZ-DSF transmission line blocks in an exemplary embodiment of the present invention;
Fig. 10 is a diagram illustrating an example of the configuration of a transmission line fiber using NZ-DSF transmission line blocks in an exemplary embodiment of the present invention;
Figs. 11A and 11B are diagrams illustrating an example of the configuration of a transmission line fiber using NZ-DSF transmission line blocks in an exemplary embodiment of the present invention;
Fig. 12 is a diagram illustrating an example of the configuration of a transmission line fiber using NZ-DSF transmission line blocks in an exemplary embodiment of the present invention;
Fig. 13 is a diagram illustrating an example of the configuration of a transmission line fiber using NZ-DSF transmission line blocks in an exemplary embodiment of the present invention; and
Fig. 14 is a diagram illustrating the configuration of an optical fiber transmission line using NZ-DSFs, as well as a dispersion map.

### PREFERRED MODES OF THE INVENTION

In an optical fiber transmission line according to the present invention, N spans of a span comprising an NZ-DSF 1 and an optical repeater 2 are serially connected. This is followed by a span comprising a DCF 3 and an optical repeater 4, whereby dispersion compensation is carried out. These components constitute a block referred to as an "NZ-DSF transmission line block".

In a transmission system to which DPSK modulation is applied in the present invention, it is possible to reduce optical waveform distortion after transmission of a DPSK signal by setting the average wavelength dispersion of an NZ-DSF transmission line block (a value obtained by dividing the cumulative wavelength dispersion of the NZ-DSF transmission line block by the length of the NZ-DSF transmission line block) to a value equal to or less than -0.4 ps/nm/km or equal to or greater than +0.4 ps/nm/km over the WDM signal wavelength band. Exemplary embodiments of the present invention will now be described.

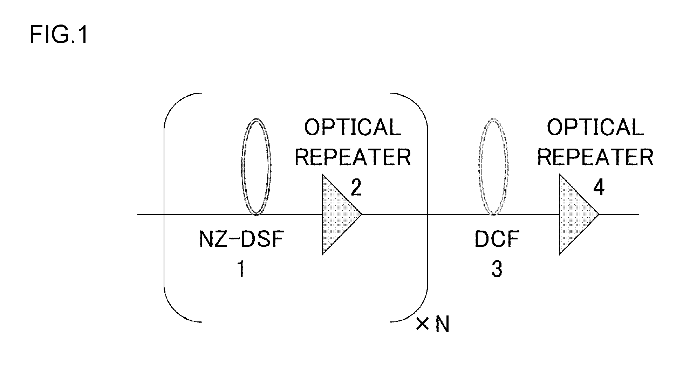

Fig. 1 is a diagram useful in describing the configuration of an exemplary embodiment of the present invention. In this embodiment, N spans of a span comprising the NZ-DSF 1 and the optical repeater 2, which compensates for loss of the NZ-DSF 1, are serially connected, after which the DCF 3 is inserted to thereby compensate for wavelength dispersion built up by the NZ-DSFs 1. The amount of dispersion compensation by the DCF 3 is set in such a manner that the average wavelength dispersion of the NZ-DSF transmission line block will be equal to or less than -0.4 ps/nm/km or equal to or greater than +0.4 ps/nm/km. The optical repeater 4 that compensates for loss of the DCF 3 is placed as a stage following the DCF 3. It should be noted that in the configuration shown in Fig. 1, the NZ-DSF 1 and optical repeater 2 constitute one set, N of these sets are serially connected and the DCF 3 and optical repeater 4 are serially connected as a succeeding stage. Naturally, however, the configuration is not limited to one in which the set composed of the DCF 3 and optical repeater 4 is placed as the succeeding stage of the N stages of the NZ-DSF 1 and optical repeater 2. For example, the set composed of the DCF 3 and optical repeater 4 may be placed as a stage preceding the N stages of the NZ-DSF 1 and optical repeater 2. Alternatively, the set composed of the DCF 3 and optical repeater 4 may be inserted between NZ-DSF transmission line blocks each comprising the serially connected N stages of the NZ-DSF 1 and optical repeater 2. Further, the arrangement of the NZ-DSFs 1 and optical repeater 2 is not limited to that in which the NZ-DSFs 1 precede the optical repeater 2; an arrangement in which the optical repeater 2 precedes the NZ-DSFs 1 may be adopted. In this case, the set composed of the DCF 3 and optical repeater 4 in Fig. 1 is such that the DCF 3 precedes the optical repeater 4.

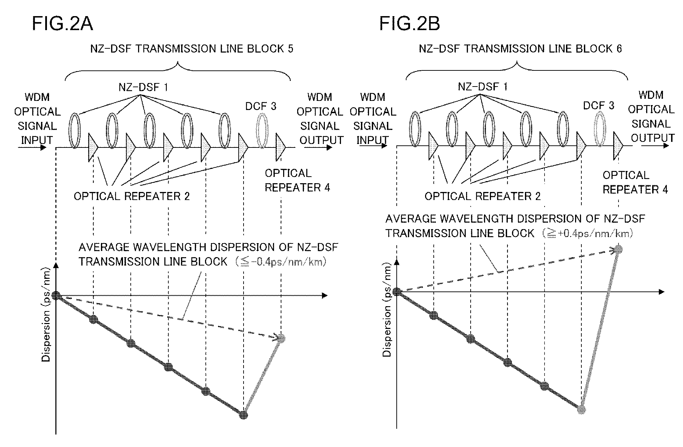

Figs. 2A and 2B are diagrams useful in describing the operation of an exemplary embodiment of the present invention. These illustrate dispersion maps in a case where five spans each comprising the NZ-DSF 1 and optical repeater 2 are serially connected (N=5 in Fig. 1). The wavelength dispersion value of the NZ-DSF 1 at a wavelength of 1550 nm is about -2 to -4 ps/nm/km.

Fig. 2A schematically illustrates a dispersion map in a case where the average dispersion of an NZ-DSF transmission line block is -0.4 ps/nm/km. Fig. 2B schematically illustrates a dispersion map in a case where the average dispersion of an NZ-DSF transmission line block is +0.4 ps/nm/km.

In the example of Fig. 2A, an NZ-DSF transmission line block 5 has five stages of NZ-DSF 1 and optical repeater 2 serially connected. When a large dispersion value that accumulates on the negative side is compensated for by the DCF 3, the NZ-DSF transmission line block 5 sets the amount of dispersion compensation to be smaller than 100% compensation and leaves some negative dispersion (the average dispersion value of the NZ-DSF transmission line block 5 is equal to or less than -0.4 ps/nm/km).

In the example of Fig. 2B, an NZ-DSF transmission line block 6 has five stages of NZ-DSF 1 and optical repeater 2 serially connected. When a large dispersion value that accumulates on the negative side is compensated for by the DCF 3, the NZ-DSF transmission line block 6 performs dispersion compensation excessively and leaves some positive dispersion (the average dispersion value of the NZ-DSF transmission line block 6 is equal to or less than +0.4 ps/nm/km).

In this embodiment, as illustrated in Figs. 2A and 2B, the NZ-DSF transmission line block is set up to perform dispersion such that the average dispersion value avoids the vicinity of zero dispersion over the entire WDM signal wavelength band, thereby making it possible to suppress an increase in phase noise into the carrier frequency. Such noise is a prime cause of signal degradation in a DPSK optical signal.

In order to describe the effectiveness of the configuration of the optical fiber transmission line of this embodiment, Fig. 3 illustrates the result of measurement of Q value after transmission of an RZ-DPSK signal over a distance of 9000 km vs. average wavelength dispersion of an NZ-DSF transmission line block (the average wavelength dispersion is obtained by dividing the cumulative wavelength dispersion of the NZ-DSF transmission line block by the length of the NZ-DSF transmission line block). Here the transmission bit rate is 10 Gbps (gigabits per second).

When the average wavelength dispersion is in the vicinity of zero dispersion wavelength, degradation of the Q value increases. It will be understood that the Q value improves as the average wavelength dispersion departs from zero dispersion wavelength.

As a result, in order to fully exploit the transmission performance of a DPSK signal in an optical fiber transmission system that employs DPSK modulation and an NZ-DSF transmission line, an effective arrangement is one in which a value equal to or less than -0.4 ps/nm/km or equal to or greater than +0.4 ps/nm/km is set as the value of average wavelength dispersion of the NZ-DSF transmission line block, whereby transmission degradation in the vicinity of zero dispersion wavelength is avoided.

Next, optical fiber transmission lines constructed of NZ-DSF transmission line blocks will be described as other exemplary embodiments of the present invention. In the NZ-DSF transmission line block 5, the average wavelength dispersion is intentionally shifted from zero dispersion wavelength. As a result, the optical fiber transmission line comprising the NZ-DSF transmission line blocks leaves a large amount of negative dispersion.

When a DCF block for compensating for residual dispersion resulting from the NZ-DSF transmission line blocks 5 is placed in the transmission line, it is required that the number of times the DCF block is inserted be limited to the minimum number (one or two times) in order to effectively suppress waveform distortion of the DPSK modulated signal.

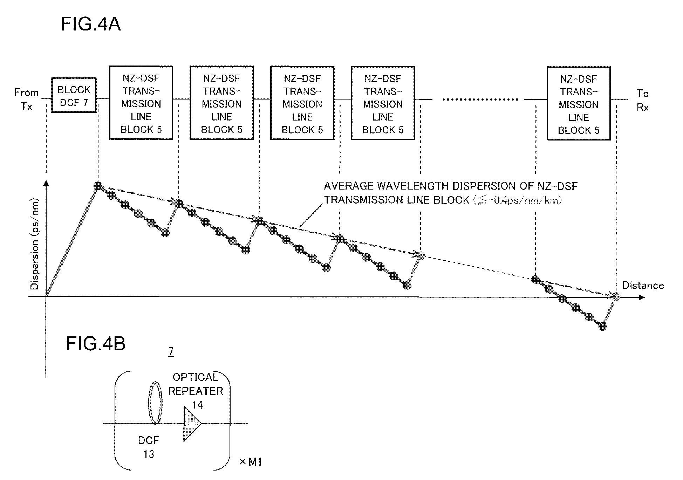

Figs. 4 to 7 illustrate configurations of the entirety of transmission line fibers using NZ-DSF transmission line blocks 5 in which the average wavelength dispersion has been set to a value equal to or less than -0.4 ps/nm/km over the band of signal wavelengths used.

In the exemplary embodiment shown in Figs. 4A and 4B, residual dispersion that accompanies the plurality of NZ-DSF transmission line blocks 5 is compensated for by a block DCF 7 placed as a span that is the initial stage of the entire transmission line (see Fig. 4A). Wavelength dispersion is set to a value on the positive side beforehand by the block DCF 7, which is the initial stage that receives the WDM signal from a transmit circuit, a plurality of the NZ-DSF transmission line blocks 5 in which the average wavelength dispersion is equal to or less than -0.4 ps/nm/km are serially connected, and the residual dispersion value at the receiving end (Rx) becomes zero. The block DCF 7 may be constructed by M1 stages (where M1 is equal to 1, 2, •••) of a DCF 13 and optical repeater 14 that compensates for loss of the DSF 13, as illustrated for example in Fig. 4B.

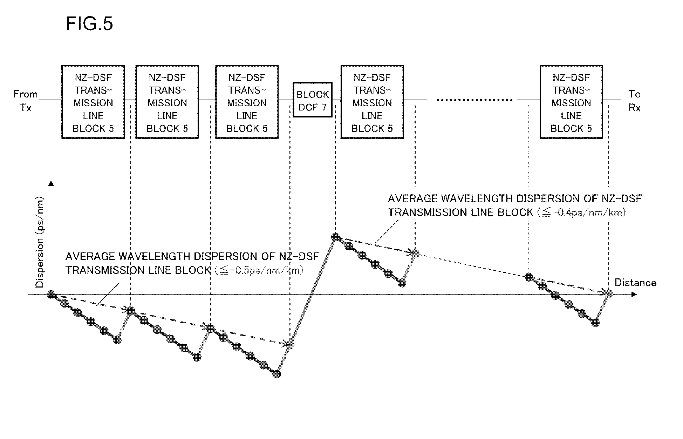

In the exemplary embodiment shown in Fig. 5, residual dispersion that accompanies the NZ-DSF transmission line blocks 5 is compensated for by the block DCF 7, which is placed as an intermediate span along the entirety of the transmission line. The intermediate block DCF 7 compensates for residual dispersion that accompanies the plurality of NZ-DSF transmission line blocks 5 ahead of it and sets the residual dispersion to a positive value so that the value of residual dispersion at the receiving end (Rx) will become zero owing to the succeeding plurality of NZ-DSF transmission line blocks 5 in which the average wavelength dispersion is equal to or less than -0.4 ps/nm/km.

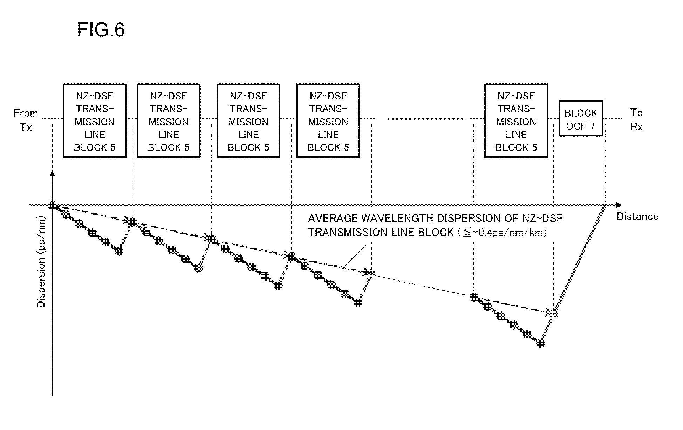

In the exemplary embodiment shown in Fig. 6, residual dispersion that accompanies the NZ-DSF transmission line blocks 5 is compensated for by the block DCF 7, which is placed as the final span of the entire transmission line. The block DCF 7 constituting the final stage compensates for residual dispersion that accompanies the plurality of NZ-DSF transmission line blocks 5 and sets the residual dispersion to zero.

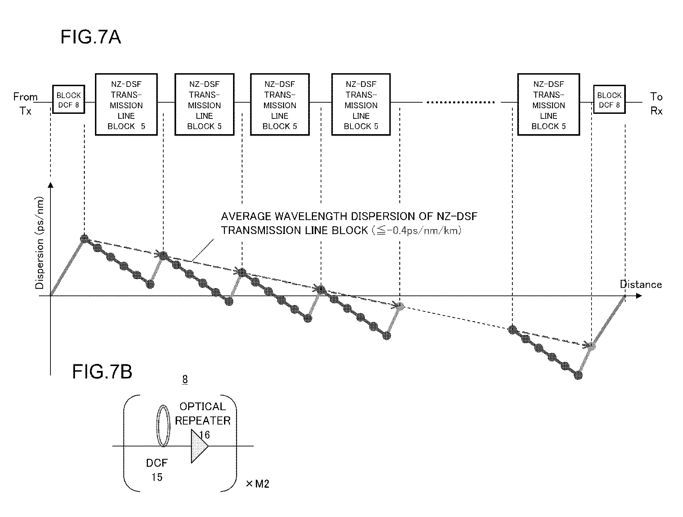

In the exemplary embodiment shown in Figs. 7A and 7B, residual dispersion that accompanies the NZ-DSF transmission line blocks 5 is compensated for one half at a time by a block DCF 8 placed as an initial span and a block DCF 8 placed as a final span (see Fig. 7A). The block DCF 8 is constructed by M2 stages (where M2 is equal to 1, 2, •••) of a DCF 15 and optical repeater 16 that compensates for loss of the DSF 15, as illustrated for example in Fig. 7B. Wavelength dispersion is set to a value on the positive side beforehand by the block DCF 8 of the initial span that receives the WDM signal from the transmit circuit, the residual dispersion value ascribable to the plurality of NZ-DSF transmission line blocks 5 in which the average wavelength dispersion is equal to or less than -0.4 ps/nm/km is compensated for by the block DCF 8 of the final span, and the residual dispersion value at the receiving end (Rx) becomes zero.

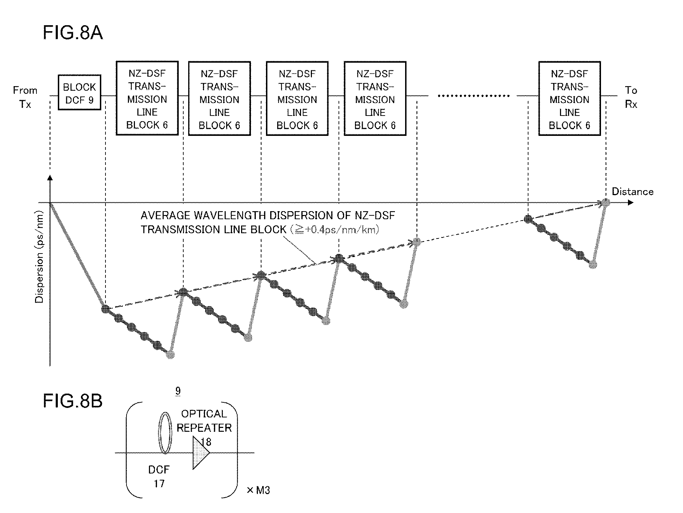

Figs. 8 to 11 illustrate configurations of the entirety of transmission line fibers of exemplary embodiments using NZ-DSF transmission line blocks 6 in which the average wavelength dispersion has been set to a value equal to or less than +0.4 ps/nm/km over the band of signal wavelengths used.

In the exemplary embodiment shown in Figs. 8A and 8B, residual dispersion that accompanies the plurality of NZ-DSF transmission line blocks 6 is compensated for by a block DCF 9 placed as a span that is the initial stage of the entire transmission line (see Fig. 8A). The block DCF 9 is constructed by M3 stages (where M3 is equal to 1, 2, •••) of a DCF 17 and optical repeater 18 that compensates for loss of the DSF 17, as illustrated for example in Fig. 8B.

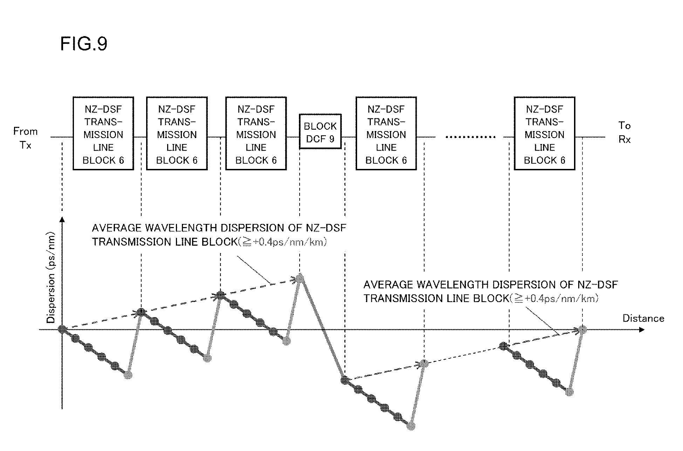

In the exemplary embodiment shown in Fig. 9, residual dispersion that accompanies the NZ-DSF transmission line blocks 6 is compensated for by the block DCF 9, which is placed as an intermediate span along the entirety of the transmission line.

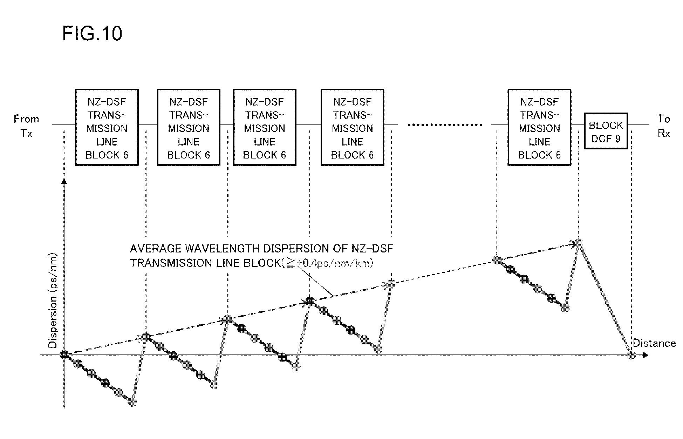

In the exemplary embodiment shown in Fig. 10, residual dispersion that accompanies the NZ-DSF transmission line blocks 6 is compensated for by the block DCF 9, which is placed as the final span of the entire transmission line.

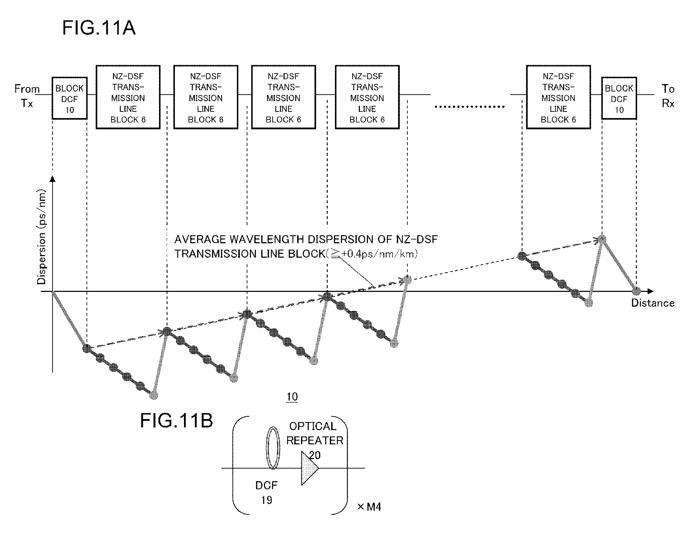

In the exemplary embodiment shown in Figs. 11A and 11B, residual dispersion that accompanies the NZ-DSF transmission line blocks 6 is compensated for one half at a time by a block DCF 10 placed as an initial span and a block DCF 10 placed as a final span (see Fig. 11A). The block DCF 10 is constructed by M4 stages (where M4 is equal to 1, 2, •••) of a DCF 19 and optical repeater 20 that compensates for loss of the DSF 19, as illustrated for example in Fig. 11B.

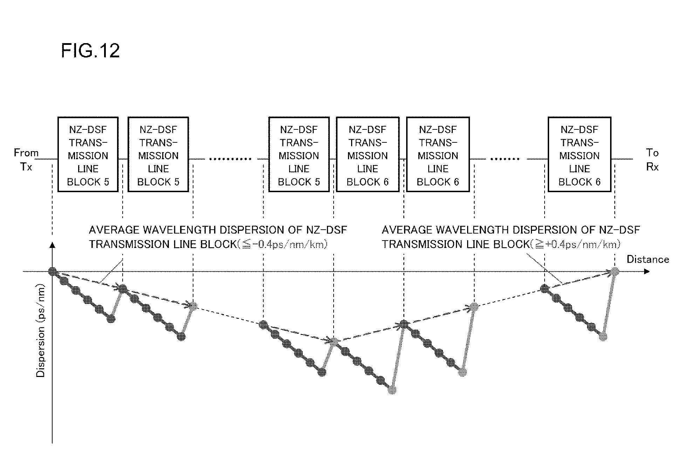

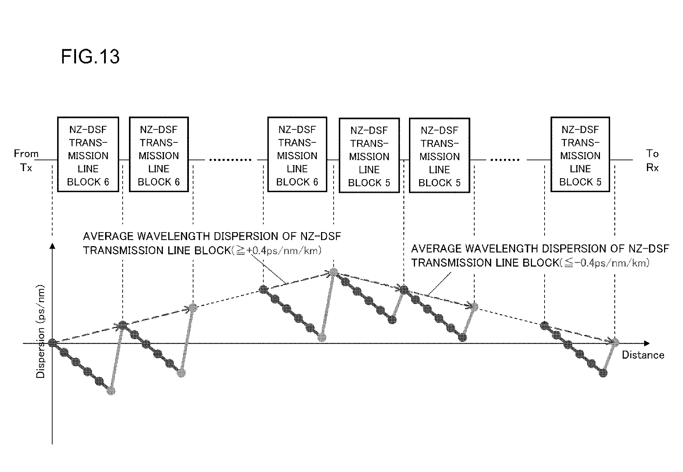

Figs. 12 and 13 illustrate configurations of the entirety of transmission line fibers of exemplary embodiments each comprising a plurality of the NZ-DSF transmission line blocks 5 in which the average wavelength dispersion has been set to a value equal to or less than -0.4 ps/nm/km and the plurality of the NZ-DSF transmission line blocks 6 in which the average wavelength dispersion has been set to a value equal to or less than +0.4 ps/nm/km.

In the exemplary embodiments shown in Figs. 12 and 13, in order to fully exploit the effect of suppressing waveform distortion of the DPSK signal by virtue of intentionally shifting the average wavelength dispersion of the NZ-DSF transmission line blocks from zero dispersion wavelength, it is important to adopt an arrangement in which the NZ-DSF transmission line blocks 5 and NZ-DSF transmission line blocks 6 do not mutually alternate in the optical fiber transmission line.

Though the present invention has been described in accordance with the foregoing embodiments, the invention is not limited to these embodiments and it goes without saying that the invention covers various modifications and changes that would be obvious to those skilled in the art within the scope of the claims.
It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.

## Claims

1. An optical transmission apparatus for transmitting an optical signal by differential phase shift keying (DPSK) modulation, **characterized in that** the optical transmission apparatus comprises
a non-zero dispersion shifted single-mode optical fiber (NZ-DSF) transmission line block including:
N stages (where N is a prescribed positive integer) of NZ-DSFs serially connected; and
at least one dispersion compensating fiber (DCF) placed at least as one stage among a preceding stage, succeeding stage and intermediate stage of the N stages of NZ-DSFs;
wherein an average wavelength dispersion value of the NZ-DSF transmission line block is made non-zero.

2. The optical transmission apparatus as claimed in claim 1, wherein the DCF makes the average wavelength dispersion value of the NZ-DSF transmission line block non-zero by allowing some dispersion, which is accumulated by the N stages of NZ-DSFs, to remain instead of applying 100% compensation, or by over-compensating for the accumulated dispersion.

3. The optical transmission apparatus as claimed in claim 1 or 2,
wherein the NZ-DSF transmission line block has an optical repeater, which compensates for loss of the NZ-DSF, as a preceding stage or succeeding stage of one stage of the NZ-DSFs.

4. The optical transmission apparatus as claimed in any one of claims 1 to 3, wherein the NZ-DSF transmission line block has an optical repeater, which compensates for loss of the DCF, as a preceding stage or succeeding stage of the DCF.

5. The optical transmission apparatus as claimed in any one of claims 1 to 4, wherein a plurality of serially connected stages of the NZ-DSF transmission line blocks are provided.

6. The optical transmission apparatus as claimed in any one of claims 1 to 5, wherein at least one block DCF that includes one or a plurality of DSFs is provided, and a residual dispersion value at a receiving end at the terminus of the optical transmission apparatus is made zero.

7. The optical transmission apparatus as claimed in claim 6, wherein the block DCF has an optical repeater, which compensates for loss of the DCF, as a preceding stage or succeeding stage of the DCF.

8. The optical transmission apparatus as claimed in claim 6 or 7,
wherein the block DCF is provided at least as any one stage among a preceding stage, intermediate stage and succeeding stage of the plurality of stages of the NZ-DSF transmission line blocks serially connected, and a residual dispersion value at the receiving end is made non-zero.

9. The optical transmission apparatus as claimed in any one of claims 5 to 8, wherein polarities of the average wavelength dispersion values of the plurality of stages of the NZ-DSF transmission line blocks are the same as one another.

10. The optical transmission apparatus as claimed in any one of claims 1 to 5, wherein there are provided:
a plurality of serially connected stages of the NZ-DSF transmission line blocks in which the average wavelength dispersion values are of positive polarity; and
a plurality of serially connected stages of the NZ-DSF transmission line blocks in which the average wavelength dispersion values are of negative polarity.

11. The optical transmission apparatus as claimed in any one of claims 1 to 5 and 10, wherein there are provided:
a first group of serially connected stages of the NZ-DSF transmission line blocks in which the average wavelength dispersion values are of positive polarity; and
a second group of serially connected stages of the NZ-DSF transmission line blocks in which the average wavelength dispersion values are of negative polarity.

12. The optical transmission apparatus as claimed in any one of claims 1 to 9, wherein the average wavelength dispersion value of the NZ-DSF transmission line block is equal to or less than -0.4 ps/nm/km.

13. The optical transmission apparatus as claimed in any one of claims 1 to 9, wherein the average wavelength dispersion value of the NZ-DSF transmission line block is equal to or less than +0.4 ps/nm/km.

14. The optical transmission apparatus as claimed in claim 10 or 11,
wherein there are provided:
a plurality of NZ-DSF transmission line blocks in which the average wavelength dispersion values are equal to or less than -0.4 ps/nm/km; and
a plurality of NZ-DSF transmission line blocks in which the average wavelength dispersion values are equal to or less than +0.4 ps/nm/km.

15. The optical transmission apparatus as claimed in any one of claims 1 to 14, wherein the optical signal is transmitted by wavelength division multiplexing (WDM).

16. An optical transmission system comprising:
the optical transmission apparatus as set forth in any one of claims 1 to 15;
a transmitting unit for outputting signal light to the optical transmission apparatus; and
a receiving unit for inputting signal light from the optical transmission apparatus.
